# EUROPEAN PATENT APPLICATION

(11) **EP 2 852 065 A1**
(43) Date of publication of application: **25.03.2015**
(21) Application number: 13791092.3
(22) Date of filing: 15.03.2013
(51) Int. Cl.: H04B 1/04, H04B 7/005, H04Q 9/00

(54) **WIRELESS SYSTEM AND WIRELESS COMMUNICATION DEVICE**

(30) Priority: 18.05.2012 JP 2012114910
(71) Applicant: Sharp Kabushiki Kaisha, Osaka-shi, Osaka 545-8522 (JP)
(72) Inventor: TAKADA, Shohji, Osaka 545-8522 (JP); HASEGAWA, Hiroshi, Osaka 545-8522 (JP); SATOH, Yoshinori, Osaka 545-8522 (JP)
(74) Representative: Müller Hoffmann & Partner
(86) International application number: PCT/JP2013/057512
(87) International publication number: WO 2013/172086

(57) **Abstract**

A wireless system (1) includes: a wireless adapter (10) including a first retaining section which retains identification information for distinguishing the wireless system (1) from another wireless system; and a wireless adapter (20) including (a) a second retaining section (24) which retains identification information identical to the identification information retained by the first retaining section (14) and (b) an executing section (22) which executes a received command only in a case where the received command contains identification information identical to the identification information retained by the second retaining section (24).

## Description

### Technical Field

The present invention relates to a wireless system for wirelessly transmitting content and commands between a source device for supplying the content and a sync device for outputting the content.

### Background Art

Television receivers (hereinafter, simply referred to as "television") equipped with HDMI (High-Definition Multimedia Interface: Trademark) have been prevalent. Along with the prevalence of HDMI, it has become common to connect various source devices to sync devices via HDMI cables. Types of source devices, which are connectable via an HDMI cable, encompass audio-visual devices such as recorders, tuners, and audio players. In addition, such types of source devices are recently expanding to mobile devices such as portable gaming devices, portable digital audio players, and smartphones.

In order to establish an HDMI connection, use of an HDMI cable is common at present as described above. This, however, may reduce the freedom in placing devices in their respective locations. For example, assume a case where (i) a mobile device (which is a source device) is connected to a television (which is a sync device) via HDMI connection and (ii) the television displays content played back by the mobile device. In such a case, it is desirable to increase freedom in placing the devices.

Patent Literature 1 discloses a wireless transmission system (hereinafter, simply referred to "wireless system") including (i) a wireless transmitting device connected to a content outputting device and (ii) a wireless receiving device connected to a display device. By causing the wireless transmitting device and the wireless receiving device to wirelessly communicate with each other, the wireless transmission system causes the display device to display content which has been supplied from the content outputting device.

### Citation List

### Patent Literature

Patent Literature 1
Japanese Patent Application Publication, Tokukai, No. 2011-77640 (Publication Date: April 14, 2011)

### Summary of Invention

### Technical Problem

However, the wireless system disclosed in Patent Literature 1 poses a problem that, in a case where two wireless systems are in the proximity of each other, CEC commands used by the respective two wireless systems interfere with each other. The following description will discuss the problem, given that (i) a first wireless system including a wireless transmitting device AT and a wireless receiving device AR is a wireless system A and (ii) a second wireless system including a wireless transmitting device BT and a wireless receiving device BR is a wireless system B.

In a case where a sync device (content display device) connected to the wireless transmitting device AT issues a CEC command, the wireless transmitting device AT wirelessly transmits the CEC command to the wireless receiving device AR, so that the CEC commands reaches each of source devices A (content outputting devices) connected to the wireless receiving device AR. If the wireless receiving device BR is located in the proximity of the wireless transmitting device AT, the wireless receiving device BR also ends up receiving the CEC command which has been wirelessly transmitted from the wireless transmitting device AT. This results in a phenomenon in which a command, which is originally intended to reach only the wireless receiving device AR and the source devices A, also reaches the wireless receiving device BR and source devices B each connected to the wireless receiving device BR.

In a case where physical addresses derived from a single sync device are assigned to (i) the wireless receiving device AR, (ii) the source devices A, (iii) the wireless receiving device BR, and (iv) the source devices B (i.e. in a case where the wireless transmitting device AT and the wireless transmitting device BT are connected to a single sync device), a phenomenon such as that described above does not cause CEC commands to interfere with each other. This is because of the following reasoning: The physical addresses of the wireless receiving device AR and the source devices A and the physical addresses of the wireless receiving device BR and source devices B never overlap each other, and therefore each of these devices can properly determine, by referring to a physical address contained in a CEC command, whether or not the CEC command is directed to the device itself.

On the other hand, in a case where physical addresses derived from different sync devices are assigned to (i) the wireless receiving device AR, (ii) the source devices A, (iii) the wireless receiving device BR, and (iv) the source devices B (i.e. in a case where the wireless transmitting device AT and the wireless transmitting device BT are connected to respective sync devices), a phenomenon such as that described above causes CEC commands to interfere with each other. This is because of the following reasoning: The physical addresses of the wireless receiving device AR and the source devices A and the physical addresses of the wireless receiving device BR and source devices B overlap each other, and therefore each of these devices cannot properly determine, by referring to a physical address contained in a CEC command, whether or not the CEC command is directed to the device itself.

The present invention has been made in view of the problem, and it is an object of the present invention to realize a wireless system in which interference of commands never occurs.

### Solution to Problem

In order to attain the object, a wireless system in accordance with one aspect of the present invention includes: a first wireless communication device to be connected to a sync device via a wired connection; and a second wireless communication device to be connected to at least one source device via a wired connection, the first wireless communication device and the second wireless communication device wirelessly communicating with each other so that content supplied from the at least one source device is transmitted to the sync device, the first wireless communication device including a first retaining section which retains identification information for distinguishing the wireless system from another wireless system, an issuing section which issues a command containing the identification information, and a transmitting section which wirelessly transmits the command issued by the issuing section, the second wireless communication device including a second retaining section which retains identification information identical to the identification information retained by the first retaining section, a receiving section which receives a received command that has been wirelessly transmitted, and an executing section which executes the received command only in a case where the received command contains identification information identical to the identification information retained by the second retaining section.

In order to attain the object, a wireless system in accordance with one aspect of the present invention includes: a first wireless communication device to be connected to at least one source device via a wired connection; and a second wireless communication device to be connected to a sync device via a wired connection, the first wireless communication device and the second wireless communication device wirelessly communicating with each other so that content supplied from the at least one source device is transmitted to the sync device, the first wireless communication device including a first retaining section which retains identification information for distinguishing the wireless system from another wireless system, an issuing section which issues a command containing the identification information, and a transmitting section which wirelessly transmits the command issued by the issuing section, the second wireless communication device including a second retaining section which retains identification information identical to the identification information retained by the first retaining section, a receiving section which receives a received command that has been wirelessly transmitted, and an executing section which executes the received command only in a case where the received command contains identification information identical to the identification information retained by the second retaining section.

Additional objects, features, and strengths of the present invention will be made clear by the description below. Furthermore, the advantages of the present invention will be evident from the following explanation with reference to the drawings.

### Advantageous Effects of Invention

As has been described, a wireless system in accordance with one aspect of the present invention includes: a first wireless communication device to be connected to a sync device via a wired connection; and a second wireless communication device to be connected to at least one source device via a wired connection, the first wireless communication device and the second wireless communication device wirelessly communicating with each other so that content supplied from the at least one source device is transmitted to the sync device, the first wireless communication device including a first retaining section which retains identification information for distinguishing the wireless system from another wireless system, an issuing section which issues a command containing the identification information, and a transmitting section which wirelessly transmits the command issued by the issuing section, the second wireless communication device including a second retaining section which retains identification information identical to the identification information retained by the first retaining section, a receiving section which receives a received command that has been wirelessly transmitted, and an executing section which executes the received command only in a case where the received command contains identification information identical to the identification information retained by the second retaining section.

In a case where there are a plurality of wireless systems each realizing HDMI connection, wireless systems thus configured prevent interference in wireless communication among the wireless systems.

### Brief Description of Drawings

Fig. 1 is a block diagram schematically illustrating a system including wireless systems in accordance with an embodiment of the present invention.
Fig. 2 is a block diagram schematically illustrating the wireless system in accordance with the embodiment of the present invention.
Fig. 3 is a flow chart illustrating a flow of a process in the system included in the wireless system in accordance with the embodiment of the present invention, which process is carried out in a case where a plurality of wireless adapters receive a command.

### Description of Embodiments

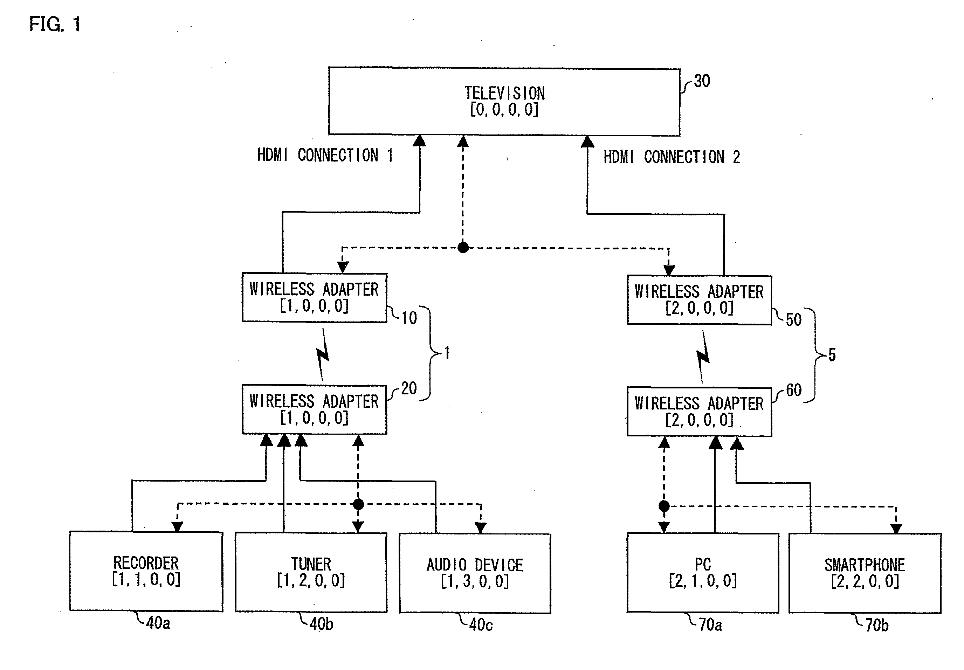

The following description will discuss, with reference to Figs. 1 through 3, a wireless system in accordance with an embodiment (hereinafter referred to as "present embodiment") of the present invention.

Fig. 1 is a block diagram schematically illustrating an HDMI system including wireless systems 1 and 5 in accordance with the present embodiment. According to the present embodiment, an HDMI system refers to a system that includes a sync device and a plurality of source devices which are connected to the sync device via an HDMI connection. Hereinafter, the HDMI system will also be referred to as "HDMI tree." In addition, according to the present embodiment, an HDMI connection refers to a wired or wireless connection via which signals can be transmitted, example of which signals encompass TMDS (Transition Minimized Differential Signaling) and CEC (Consumer Electronics Control), both of which comply with the HDMI standard. In Fig. 1, solid lines indicate TMDS lines for transmitting content, and broken lines indicate CEC lines for transmitting a CEC command that controls the HDMI system.

As illustrated in Fig. 1, a television 30, which is a sync device, has two HDMI terminals. To one (HDMI connection 1) of the HDMI terminals, a wireless adapter 10 is connected via a wired connection. To the other one (HDMI connection 2) of the HDMI terminals, a wireless adapter 50 is connected.

The wireless adapter 10, in combination with a wireless adapter 20, makes up a first wireless system 1. The wireless adapter 20 is connected to a recorder 40a, a tuner 40b, and an audio device 40c. The wireless system 1 is used for communication between these source device and the television 30. Meanwhile, the wireless adapter 50, in combination with a wireless adapter 60, makes up a second wireless system 5. The wireless adapter 60 is connected to a PC 70a and a smartphone 70b. The wireless system 5 is used for communication between these source devices and the television 30. The details of the present HDMI system, which details include physical addresses, will be described below.

### (Configuration of Wireless System 1)

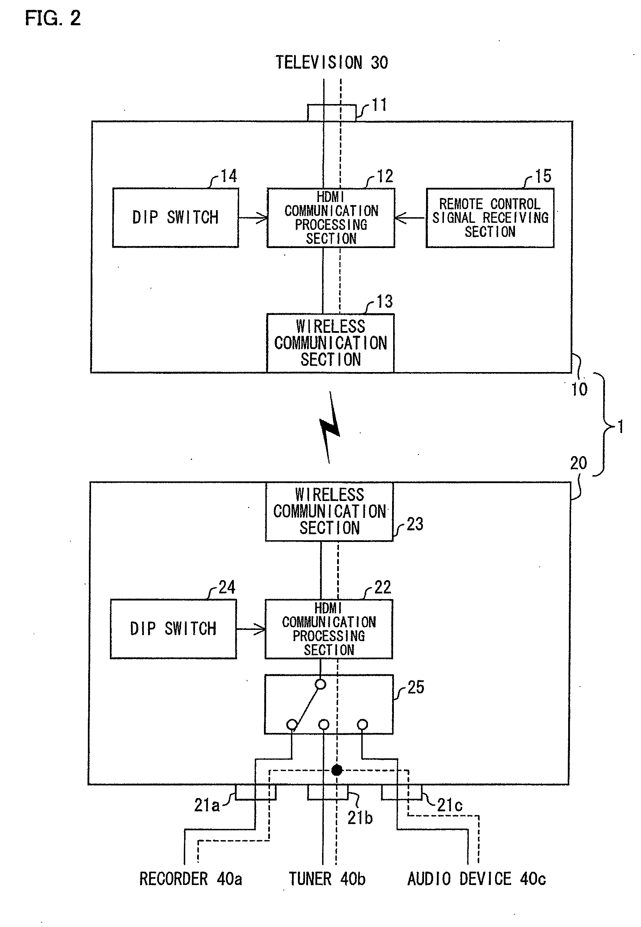

Fig. 2 is a block diagram illustrating the wireless system 1. As is the case of Fig. 1, solid lines indicate TMDS lines, and broken lines indicate CEC lines.

As illustrated in Fig. 2, the wireless system 1 includes (i) the wireless adapter 10 which is a first wireless communication device and (ii) the wireless adapter 20 which is a second wireless communication device. The wireless adapter 10 includes an HDMI terminal 11 which is connected to an HDMI terminal of the television 30 via an HDMI cable. The wireless adapter 20 includes an HDMI terminal 21a which is connected to an HDMI terminal of the recorder 40a via an HDMI cable. Likewise, an HDMI terminal 21b of the wireless adapter 20 is connected to an HDMI terminal of the tuner 40b via an HDMI cable. An HDMI terminal 21c of the wireless adapter 20 is connected to an HDMI terminal of the audio device 40c via an HDMI cable. Needless to say, the number of terminals of the wireless adapter 20 is not limited to three, but can be set to any number by a manufacturer, provided that the terminals comply with the HDMI standard. Note that the solid lines indicate TMDS lines, and the broken lines indicate CEC lines.

On the other hand, a wireless communication section 13 included in the wireless adapter 10 and a wireless communication section 23 included in the wireless adapter 20 wirelessly communicate with each other.

Note that each of the HDMI cables includes, in addition to a TMDS line and a CEC line described above, (i) a DDC (Display Data Cannel) line for transmitting EDID (Extended Display Identification Data), (ii) an HPD line for transmitting an HPD (Hot Plug Detect) signal, and (iii) a 5V electric power line having a voltage (potential with respect to ground potential) which is controlled to be 5V by the source devices in order for a connection to be detected. Note, however, that the present embodiment will discuss only TMDS lines and CEC lines which are relative to the features of the present invention, and the rest of the lines will not be described.

### (Wireless Adapter 10)

As illustrated in Fig. 2, the wireless adapter 10 includes an HDMI communication processing section 12, a wireless communication section 13, a DIP switch 14, and a remote control signal receiving section.

### (Dip Switch 14)

The DIP switch 14, which is a first retaining section, is a retaining section which retains identification information for distinguishing the wireless system 1 from another wireless system(s). For example, the identification information can be expressed in decimal numbers such as [1], [2], [3]..., or can be expressed in alphabetic characters such as [A], [B], [C]... The present embodiment will be described on the assumption that the identification information is expressed in alphabetic characters.

The DIP switch 14 includes a plurality of switches each indicating a "0" state or a "1" state. The number of switches included in the DIP switch 14 is not limited. According to the present embodiment, the DIP switch 14 includes four switches. This allows the DIP switch 14 to retain 16 pieces of identification information as [A], [B]... [P].

Since identification information to be retained by the DIP switch 14 is information for distinguishing the wireless system 1 from another wireless system(s), there needs to be consistency between identification information retained by the DIP switch 14 and identification information retained by a DIP switch 24 (described later) included in the wireless adapter 20. When shipping a wireless system 1, a manufacturer of the wireless system 1 sets respective pieces of identification information, which are retained by a DIP switch 14 and by a DIP switch 24, to be one of [A], [B]... [P]. Note that when shipping wireless systems, the manufacturer may set identification information of the wireless systems so that identification information of each wireless system differs from that of another wireless system. This causes 16 wireless systems, which are shipped one after another for example, to retain respective pieces of identification information as [A], [B]... [P]. Therefore, even in a case where a plurality of wireless systems are in the proximity of each other, wireless systems configured as in the present embodiment can reduce a possibility that respective pieces of identification information retained by the wireless systems overlap each other.

According to the present embodiment, it is assumed that the DIP switch 14 and the DIP switch 24 each retain identification information which is [A]. The DIP switch 14 supplies, to the HDMI communication processing section 12, the identification information [A] thus retained by the DIP switch 14.

### (Remote Control Signal Receiving Section 15)

The wireless system 1 includes a remote control as a section by which a user controls the wireless system 1. The remote control outputs a remote control signal which instructs that a control selected by the user be carried out. The remote control signal receiving section 15 receives the remote control signal, and then supplies the remote control signal to the HDMI communication processing section 12.

An example of a control of the wireless system 1, which control can be instructed by use of the remote control, is switching between source devices that output content (described later). Assume a case where the recorder 40a, the tuner 40b, and the audio device 40c, each of which is connected to the wireless adapter 20, are compatible with a CEC command. In such a case, operations of these devices can be controlled by use of the remote control. For example, the user can instruct, by use of the remote control, controlling the recorder 40a to play back, stop playing back, start recording, and stop recording.

### (HDMI Communication Processing Section 12)

The HDMI communication processing section 12, which is an issuing section, issues, in accordance with the remote control signal supplied from the remote control signal receiving section 15, a CEC command that corresponds to an instruction of the remote control signal. The HDMI communication processing section 12 then supplies the CEC command to the wireless communication section 13.

According to the present embodiment, a remote control signal instructs switching between the source devices that output content. Accordingly, a CEC command issued by the HDMI communication processing section 12 is a CEC command that commands switching between the source devices that output content. In issuing the CEC command, the HDMI communication processing section 12 issues, in accordance with the identification information supplied from the DIP switch 14, a CEC command as a vendor command that contains the identification information [A]. Switching between the source devices that output content will be described later.

The HDMI communication processing section 12 also serves as interface for receiving, via a CEC line, a CEC command issued by the television 30. The HDMI communication processing section 12 receives and then supplies the CEC command to the wireless communication section 13. In addition, the HDMI communication processing section 12 also serves as interface for supplying, to the television 30, a CEC command and content which are supplied from the wireless communication section 13 via the CEC line and the TMDS line.

### (Wireless Communication Section 13)

The wireless communication section 13, which is a transmitting section, emits an electromagnetic ray to and detects an electromagnetic ray from the wireless communication section 23 included in the wireless adapter 20 so that there is wireless transmission of a CEC command and content between the wireless communication section 13 and the wireless communication section 23. More specifically, the wireless communication section 13 (i) receives, from the HDMI communication processing section 12, a CEC command which instructs switching between the source devices and which contains the identification information [A], (ii) converts the CEC command into an electromagnetic ray, and then (iii) emits the electromagnetic ray.

Needless to say, what the wireless communication section 13 converts into an electromagnetic ray to emit is not only the vendor command described above but also a CEC command which is transmitted from the television 30 and received by the wireless communication section 13 via the HDMI communication processing section 12.

The wireless communication section 13 also detects an electromagnetic ray which has been emitted from the wireless communication section 23. As described later, an electromagnetic ray emitted from the wireless communication section 23 is obtained by converting, into an electromagnetic ray, an electric signal that indicates a CEC command and content supplied from a source device. The wireless communication section 13 (i) converts, into an electric signal, the electromagnetic ray indicative of the CEC command and the content and then (ii) supplies the electromagnetic ray to the HDMI communication processing section 12.

### (Wireless Adapter 20)

As illustrated in Fig. 2, the wireless adapter 20 includes (i) an HDMI communication processing section 22, (ii) the wireless communication section 23, (iii) the DIP switch 24 which is a retaining section, and (iv) a source switching section which is a switching section.

### (DIP Switch 24)

The DIP switch 24, which is a second retaining section, retains identification information for distinguishing the wireless system 1 from another wireless system(s). According to the present embodiment, the DIP switch 24 included in the wireless adapter 20 is similar in configuration to the DIP switch 14 included in the wireless adapter 10. As is the case of the DIP switch 14, the DIP switch 24 retains identification information [A], and supplies the identification information [A] to the HDMI communication processing section 22.

### (Modification of Retaining Section)

According to the present embodiment, respective configurations of the first retaining section and of the second retaining section can each be any configuration, provided that the first retaining section and the second retaining section can each retain identification information which is unique to the wireless system 1.

For example, the first retaining section and the second retaining section can each be a memory capable of retaining any identification information. In a case where a user executes a particular operation on the wireless adapter 10, the wireless communication section 13 wirelessly transmits the identification information retained by the first retaining section. Then, the wireless communication section 23 receives the identification information thus wirelessly transmitted, and supplies the identification information to the HDMI communication processing section 22. Then, the HDMI communication processing section 22 writes the identification information in the second retaining section.

According to the configuration, the particular operation of the user on the wireless adapter 10 causes the identification information, which is retained by the first retaining section, to be wirelessly transmitted and then written in the second retaining section. In other words, all that the user needs to do to cause the first retaining section and the second retaining section to retain identical identification information is to operate the wireless adapter 10. This increases the convenience of the user.

The particular operation of the user is not limited to any specific one, provided that the particular operation serves as a trigger for synchronization of respective pieces of identification information retained by the first retaining section and by the second retaining section. For example, the wireless adapter 10 can include an identification information synchronizing switch, and the user can execute the particular operation by holding down the identification information synchronizing switch for a predetermined length of time (e.g. 10 seconds). Alternatively, the user can execute the particular operation by holding down an identification information synchronizing switch included in the remote control.

In addition, in a case where the particular operation is executed, the identification information retained by the first retaining section can be updated before the wireless communication section 13 wirelessly transmits the identification information. In so doing, a method of updating the identification information is not limited to any particular one. According to the configuration, the particular operation of the user (i) causes the identification information of the first retaining section to be updated and then (ii) causes the updated identification information to be automatically written in the second retaining section. Therefore, the user can cause the respective pieces of identification information of the first retaining section and of the second retaining section to be updated and synchronized only by executing the particular operation on the wireless adapter 10.

The above described step of causing the identification information of the first retaining section to be written in the second retaining section is, for example, a step of pairing the wireless adapter 10 and the wireless adapter 20 together. In this case, in order to prevent the identification information, which has been transmitted from the wireless adapter 10, from being received by any communication device other than the wireless adapter 20, the following configuration is preferable: For example, when the pairing is executed, a reception sensitivity of the wireless adapter 20 or a transmission intensity of the wireless adapter 10 is lowered so that transmission/reception of identification information is executed only if the wireless adapter 10 and the wireless adapter 20 are in the proximity of each other. Alternatively, the pairing can be executed while the wireless adapter 10 and the wireless adapter 20 are each isolated from another communication device(s) (i.e. while another communication device(s) is placed outside a coverage area of the wireless adapter 10).

### (Wireless Communication Section 23)

The wireless communication section 23, which is a receiving section, detects and emits an electromagnetic ray falling within a predetermined frequency range. The predetermined frequency range encompasses frequencies of the electromagnetic ray emitted from the wireless communication section 13 and of other electromagnetic rays. As illustrated in Fig. 1, for example, in a case where the HDMI tree including the television 30 also includes the wireless system 1 and the wireless system 5, the wireless communication section 23 can detect an electromagnetic ray (indicative of a CEC command) which has been emitted from the wireless adapter 50. Then, the wireless communication section 23 (i) converts, into an electric signals, all of detected electromagnetic rays including an electromagnetic ray(s) other than the electromagnetic ray emitted from the wireless communication section 13 and then (ii) supplies the electric signals to the HDMI communication processing section 22.

Needless to say, the predetermined frequency range encompasses a frequency of an electromagnetic ray, which has been emitted from the wireless communication section 13 and which indicates a CEC command. A case where the wireless communication section 23 detects an electromagnetic ray which has been emitted from the wireless communication section 13 and which indicates a CEC command will be described below.

In a case where the wireless communication section 23 detects an electromagnetic ray emitted from the wireless communication section 13, the wireless communication section 23 converts the electromagnetic ray into an electric signal indicative of a CEC command, and then supplies the electric signal to the HDMI communication processing section 22. Note that an electromagnetic ray emitted from the wireless communication section 13 is obtained by converting, into an electromagnetic ray, an electric signal that indicates a CEC command which instructs switching between the source devices and which contains the identification information [A]. Accordingly, a CEC command supplied from the wireless communication section 23 to the HDMI communication processing section 22 (i) instructs switching between the source devices and (ii) contains the identification information [A].

The wireless communication section 23 also converts, into an electromagnetic ray to emit, an electric signal which indicates a CEC command and content and which has been supplied from the HDMI communication processing section 22 via the CEC line and the TMDS line.

### (HDMI communication processing section 22)

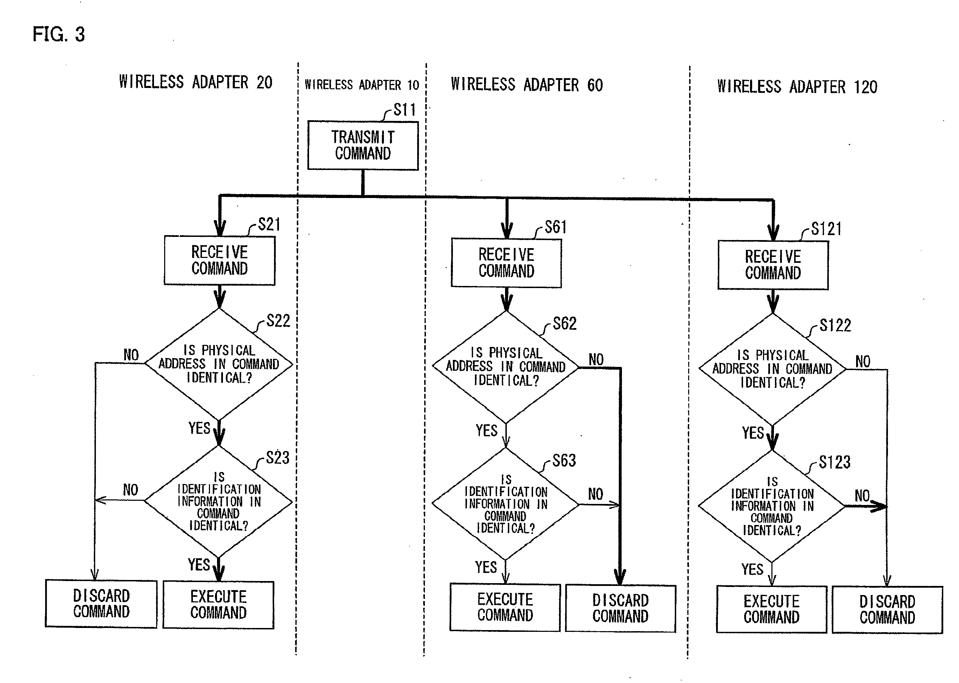

The HDMI communication processing section 22, which is an executing section, receives, from the wireless communication section 23, the electric signal obtained by converting the electromagnetic ray. The electric signal contains (i) an electric signal which indicates the CEC command and which has been transmitted from the wireless communication section 13 included in the wireless adapter 10 and (ii) an electric signal transmitted from any device other than the wireless adapter 10. In a case where the HDMI communication processing section 22 receives the CEC command, the HDMI communication processing section 22 executes the CEC command only if there is a match between (a) identification information contained in the CEC command thus received and (b) identification information retained by the DIP switch 24. Specifically, since the identification information retained by the DIP switch 24 is identification information [A], the HDMI communication processing section 22 executes the command only if the command contains the identification information [A]. The details of a flow of command execution will be described later with reference to Fig. 3.

According to the configuration, the HDMI communication processing section 22 executes only a CEC command which has been issued by the HDMI communication processing section 12 and then transmitted from the wireless communication section 13. Therefore, even in a case where another wireless system(s) is present in the proximity of the wireless system 1, there is no possibility that the wireless system 1 and said another wireless system interfere with each other.

In a case where a CEC command received by the HDMI communication processing section 22 is a CEC command that instructs switching between the source devices which are connected to the wireless adapter 20, the HDMI communication processing section 22 controls the source switching section 25 to switch between the source device in accordance with the CEC command.

The HDMI communication processing section 22 also supplies, to the wireless communication section 13, a CEC command and content which are supplied from the source switching section 25 via the CEC line and the TMDS line.

### (Source Switching Section 25)

The source switching section 25 is a switching section for switching between pieces of content to be supplied to the HDMI communication processing section 22. As illustrated in Fig. 2, the source switching section 25 has one side to which (i) the recorder 40a is connected via the HDMI terminal 21a by use of an HDMI cable, (ii) the tuner 40b is connected via the HDMI terminal 21b by use of an HDMI cable, and (iii) the audio device 40c is connected via the HDMI terminal 21c by use of an HDMI cable. In other words, three HDMI cables are connected to said one side of the source switching section 25. On the other hand, the source switching section 25 has the other side to which the HDMI communication processing section 22 is connected by use of lines corresponding to the respective HDMI cables.

The source switching section 25 (i) selects one of the three TMDS lines via which the source switching section 25 is connected to the source device and then (ii) connects the selected one of the TMDS lines to a TMDS line which is connected to the HDMI communication processing section 22. In other words, the source switching section 25 serves as a switch for selecting, from the three source devices, one source device from which content is to be supplied. Fig. 2 shows a case where the source switching section 25 is selecting the recorder 40a as a source device from which content is supplied. In this case, the content played back by the recorder 40a is supplied to the television 30 via the wireless system 1.

In contrast to the TMDS lines, the CEC lines are always connected to the respective source devices. That is, as illustrated in Fig. 2, there is always a connection between (i) the CEC lines connected to one side of the source switching section 25 (i.e. the three CEC lines connecting the source switching section 25 to the respective source devices) and (ii) the CEC line connected to the other side of the source switching section 25.

### (Switching Between Source Devices by CEC Command)

As has been described, in a case where a CEC command received by the HDMI communication processing section 22 is a CEC command that instructs switching between the source devices from which content is to be supplied, the HDMI communication processing section 22 controls the source switching section 25 to switch between the source devices in accordance with the CEC command.

For example, in a case where the HDMI communication processing section 22 receives a CEC command for switching a source device to the tuner 40b, the HDMI communication processing section 22 controls the source switching section 25 to select the TMDS line which is connected to the tuner 40b. Accordingly, the source switching section 25 is controlled to connect the TMDS line, which is connected to the HDMI communication processing section 22, to the TMDS line, which is connected to the tuner 40b. This causes content, which is played back by the tuner 40b, to be supplied to the television 30 via the wireless system 1.

### (First HDMI Tree)

A first HDMI tree in accordance with the present embodiment will be described next with reference to Fig. 1. In Fig. 1, solid lines indicate TMDS lines each configured to transmit content, and broken lines indicate CEC lines each configured to transmit a CEC command for controlling the HDMI system. As indicated by arrows added to the respective solid lines, content supplied from the source devices is supplied to the sync device. That is, the content is transmitted in a single direction. In contrast, as indicated by arrows added to the respective broken lines, CEC commands are bi-directionally transmitted.

An HDMI connection 1 terminal of the television 30 is connected to the wireless adapter 10 via an HDMI cable. The wireless adapter 20 is connected to the recorder 40a, the tuner 40b, and the audio device 40c via the respective HDMI cables. In contrast, the wireless adapter 10 and the wireless adapter 20 wirelessly communicate with each other. There is thus a physical separation between (i) the television 30 and (ii) the recorder 40a, the tuner 40b, and the audio device 40c.

Meanwhile, an HDMI connection 2 terminal of the television 30 is connected to the wireless adapter 50 via an HDMI cable. The wireless adapter 60 is connected to the PC 70a and the smartphone 70b via the respective HDMI cables. In contrast, the wireless adapter 50 and the wireless adapter 60 wirelessly communicate with each other. There is thus a physical separation between (i) the television 30 and (ii) the PC 70a and the smartphone 70b.

The first HDMI tree thus includes the wireless system 1 and the wireless system 5 in accordance with the present embodiment. As has been described, identification information of the wireless system 1 (respective pieces of identification information retained by the wireless adapter 10 and the wireless adapter 20) is identification information [A]. On the other hand, identification information of the wireless system 5 (respective pieces of identification information retained by the wireless adapter 50 and the wireless adapter 60) is identification information [B]. This prevents wireless communication of the wireless system 1 and that of the wireless system 5 from interfering with each other. In other words, in a case where there are a plurality of wireless systems each realizing HDMI connection, wireless systems configured as in the present embodiment prevent interference in wireless communication among the wireless systems.

### (Interference between First HDMI Tree and Second HDMI Tree)

Although not illustrated, a second HDMI tree is an HDMI tree in which a television C (which is a sync device) is connected to a recorder C and a tuner C (which are source devices) through an HDMI connection via a wireless system C of the present embodiment. The wireless system C includes (i) a wireless adapter C connected to the television C and (ii) a wireless adapter 120 connected to the recorder C and to the tuner C. The second HDMI tree is placed in the proximity of the first HDMI tree, so that the wireless system 1 and the wireless system 5 included in the first HDMI tree are located within such a distance from the wireless system C included in the second HDMI tree, which distance allows for wireless communication.

Under these conditions in which the different HDMI trees are present, there is a risk that physical addresses, which are assigned to the source devices included in the first HDMI tree, may overlap physical addresses which are assigned to the source devices included in the second HDMI tree. In a case of HDMI trees each configured only with the use of wired connections, overlapping of physical addresses of the different HDMI trees would not pose a problem. However, in a case where physical addresses included in a plurality of HDMI trees employing wireless connections overlap each other, wireless communications then interfere with each other, and therefore cannot be carried out properly. Identification information of the wireless system in accordance with the present embodiment solve the problem of interference between different HDMI trees.

Assume a case where a first HDMI tree and a second HDMI tree coexist in the same home, and that the second HDMI tree is an HDMI tree which has been installed been more lately. In such a case, there is a high possibility that the HDMI trees were installed by a single user or by users residing together such as family members. It is herein assumed that the first HDMI tree and the second HDMI tree were installed by a user x. In this case, the user x is aware of the status of the first HDMI tree. Specifically, the user x is aware that (i) identification information retained by a wireless system 1 is identification information [A] and (ii) identification information retained by a wireless system 5 is identification information [B]. Therefore, the user x only needs to set identification information retained by a wireless system C to, for example, identification information [C]. In order to set the identification information retained by the wireless system C to the identification information [C], it is only necessary to change settings of respective DIP switches included in two wireless adapters. Therefore, the user x can easily change the settings. Setting the DIP switches as such causes the respective pieces of identification information, which are retained by the wireless system 1, the wireless system 5, and the wireless system C, to be all different. This prevents the wireless system 1, the wireless system 5, and the wireless system C from interfering with each other.

In a case where a second HDMI tree exists in a home different from a home in which a first HDMI tree exists, a user who installed the second HDMI tree (hereinafter referred to as "user y") is different from a user x who installed the first HDMI tree. Therefore, the user y could not be aware of the status of the first HDMI tree. In this case, if, for example, identification information retained by a wireless system C is set to identification information [A], then a wireless system 1 and the wireless system C interfere with each other. However, the user y only needs to change the identification information retained by the wireless system C to, for example, identification information [C] when the user y becomes aware that the wireless system C and another wireless system are interfering with each other. This allows the user y to solve interference between the wireless system C and said another wireless system. In a case where the user x becomes aware of the interference, the user x only needs to change one or both of respective pieces of identification information of the wireless system 1 and a wireless system 5. This causes the interference to be solved.

Even in a case where there are thus a plurality of wireless systems each realizing HDMI connection and each including a sync device, wireless systems configured as in the present embodiment prevent interference in wireless communication among the wireless systems.

### [Modification]

A wireless system a, which is a modification of the wireless system 1, will be described below with respect to Figs. 1 and 2. The wireless system a is similar in main block configuration to the wireless system 1. Therefore, members included in the wireless system a are assigned reference signs identical to those assigned to the members included in the wireless system 1.

According to the wireless system a, a CEC command issued by a HDMI communication processing section 12 included in a wireless adapter 10 contains not only identification information but also a physical address assigned to the wireless system 1. Thus, physical addresses, which are assigned to devices included in an HDMI tree will be described below.

### (Physical Address)

The devices included in the HDMI system are each assigned a unique physical address in accordance with a class of the device. The physical address is identification numbers represented by use of four divided numerical values such as [α,β,χ,δ,]. Note that α, β, x, and δ are four-bit numbers, that is, decimal numbers ranging from 0 to 15. In the example of the first HDMI tree shown in Fig. 1, the television 30, which is a sync device, is a device assigned a physical address, [0,0,0,0].

The devices connected to the television 30 are each assigned a physical address in accordance with a physical address allocation rule of the HDMI. First, the devices connected (via HDMI connection) to the television 30 are assigned, one after another, physical addresses that differ in α from each other such as [1,0,0,0], [2,0,0,0], [3,0,0,0]... Therefore, the physical address of the wireless system 1 is [1,0,0,0], and the physical address of the wireless system 5 is [2,0,0,0].

The devices connected to the wireless system 1 and to the wireless system 5 are assigned physical addresses that differ in β from each other. Specifically, the recorder 40a, the tuner 40b, and the audio device 40c, which are included in the wireless system 1, are assigned [1,1,0,0], [1,2,0,0], and [1,3,0,0], respectively. Meanwhile, the PC 70a and the smartphone 70b, which are included in the wireless system 5, are assigned [2,1,0,0] and [2,2,0,0], respectively.

If there were device(s) connected to the recorder 40a, then the devices would be assigned physical addresses that differ in x from each other such as [1,1,1,0], [1,1,2,0]... Then, devices connected to the devices connected to the recorder 40a would be assigned physical addresses that differ in δ from each other such as [1,1,1,1], [1,1,1,2]...

In the example of the second HDMI tree (not illustrated), the television C, which is a sync device, is assigned a physical address [0,0,0,0]. The wireless adapter C, which is one of the wireless adapters included in the wireless system C, is connected to the television C via a wired connection. The wireless adapter C including the wireless system C is assigned a physical address [1,0,0,0]. The recorder C and the tuner C, which are connected to the wireless adapter 120 (included in the wireless system C) via a wired connection, are assigned physical addresses [1,1,0,0] and [1,2,0,0], respectively.

### (HDMI Communication Processing Section)

A configuration of the wireless system a will be described next. The wireless system a differs from the wireless system 1 in terms of the HDMI communication processing section 12 and an HDMI communication processing section 22 which are an issuing section and an executing section, respectively. Therefore, the HDMI communication processing section 12 and the HDMI communication processing section 22 will be described in the modification. It is assumed that the wireless system a retains identification information [A] and is assigned a physical address [1,0,0,0].

The HDMI communication processing section 12 includes a first storage section (not illustrated in Fig. 2). The physical address thus assigned [1,0,0,0] is stored in the first storage section. Then, in issuing a CEC command, the HDMI communication processing section 12 issues a CEC command that contains (i) the identification information [A] supplied from a DIP switch 14 and (ii) the physical address [1,0,0,0] which is stored in the first storage section.

The HDMI communication processing section 22 includes a second storage section (not illustrated in Fig. 2). The physical address [1,0,0,0] which is assigned to the wireless system a, is stored in the second storage section. Then, the HDMI communication processing section 22 executes a CEC command (which is received via wireless communication) only in a case where (i) the CEC command contains identification information identical to the identification information [A] retained by a DIP switch 24 and (ii) the CEC command contains a physical address identical to the physical address [1,0,0,0] which is stored in the second storage section.

Even in a case where there are a plurality of wireless systems each realizing HDMI connection and some of the plurality of wireless systems retain identical identification information, wireless systems configured as described above prevent interference in wireless communication among the wireless systems.

### (Flow of Command Execution)

A flow of command execution by the HDMI communication processing section 22 will be described below with reference to Fig. 3. It is herein assumed that the wireless system 1, the wireless system 5, and the wireless system C are each configured as in the modification of the wireless system in accordance with the present embodiment. Fig. 3 is a flow chart illustrating a flow of a process in which an HDMI communication processing section included in each wireless adapter executes a command in a case where the first HDMI tree and the second HDMI tree exist. Note that a process in which "an HDMI communication processing section included in a wireless adapter executes a command" will also be described as "the wireless adapter executes the command."

Respective pieces of identification information retained by the wireless adapter 10 and the wireless adapter 20 included in the wireless system 1 are identification information [A]. A physical address assigned to the wireless system 1 is [1,0,0,0]. Respective pieces of identification information retained by the wireless adapter 50 and the wireless adapter 60 included in the wireless system 5 are identification information [B]. A physical address assigned to the wireless system 5 is [2,0,0,0]. Respective pieces of identification information retained by the wireless adapter C and the wireless adapter 120 included in the wireless system C are identification information [C]. A physical address assigned to the wireless system C is [1,0,0,0].

Note that in the flow chart shown in Fig. 3, a flow in a case where the wireless adapter 20, the wireless adapter 60, and the wireless adapter 120 each receive a CEC command from the wireless adapter 10 is indicated by a bold, solid line.

Step S1: The wireless adapter 10 included in the wireless system 1 transmits a CEC command. The CEC command contains the identification information [A] and the physical address [1,0,0,0].

### (Wireless Adapter 20)

Step S21: The wireless communication section 23 included in the wireless adapter 20 receives the CEC command, and then supplies the CEC command to the HDMI communication processing section 22.

Step S22: The HDMI communication processing section 22 carries out determination of whether or not the physical address [1,0,0,0] contained in the CEC command is identical to the physical address [1,0,0,0] of the wireless adapter 20, which physical address is stored in the second storage section. Since a result of the determination is "identical", the process proceeds to a step S23. If the result of the determination is "not identical", the HDMI communication processing section 22 discards the CEC command.

Step S23: The HDMI communication processing section 22 carries out determination of whether or not the identification information [A] contained in the CEC command is identical to the identification information [A] retained by the wireless adapter 20. Since a result of the determination is "identical", the HDMI communication processing section 22 executes the CEC command. If the result of the determination is "not identical", the HDMI communication processing section 22 discards the CEC command.

The HDMI communication processing section 22 thus executes a received CEC command only in a case where (i) the CEC command contains identification information identical to that retained by the DIP switch 24 and (ii) the CEC command contains a physical address identical to that stored in the second storage section.

Note that an order, in which the HDMI communication processing section 22 carries out the step S22 and the step S23, is not limited to the above described order. In other words, the step S23 can be carried out prior to the step S22. Note also that in a case where the HDMI communication processing section 12 included in the wireless system is configured to issue a command that contains no physical address, the HDMI communication processing section 22 skips the step S22.

### (Wireless Adapter 60)

Step S61: A wireless communication section included in the wireless adapter 60 receives the CEC command, and then supplies the CEC command to an HDMI communication processing section included in the wireless adapter 60.

Step S62: The HDMI communication processing section carries out determination of whether or not the physical address [1,0,0,0] contained in the CEC command is identical to the physical address [2,0,0,0] stored in a second storage section included in the wireless adapter 60. Since a result of the determination is "not identical", the HDMI communication processing section 62 included in the wireless adapter 60 discards the CEC command. If the result of the determination is "identical", the process proceeds to a step S63.

Step S63: The HDMI communication processing section carries out determination of whether or not the identification information contained in the CEC command is identical to the identification information [B] retained by the wireless adapter 60. If a result of the determination is "identical", the HDMI communication processing section included in the wireless adapter 60 executes the CEC command. If the result of the determination is "not identical", the HDMI communication processing section discards the CEC command.

### (Wireless Adapter 120)

Step S121: A wireless communication section included in the wireless adapter 120 receives the CEC command, and supplies the CEC command to an HDMI communication processing section included in the wireless adapter 120.

Step S122: The HDMI communication processing section carries out determination of whether or not the physical address [1,0,0,0] contained in the CEC command is identical to the physical address [1,0,0,0] stored in a second storage section included in the wireless adapter 120. Since a result of the determination is "identical", the process proceeds to a step S123. If the result of the determination is "not identical", the HDMI communication processing section included in the wireless adapter 120 discards the CEC command.

Step S123: The HDMI communication processing section carries out determination of whether or not the identification information [A] contained in the CEC command is identical to the identification information [A] retained by the wireless adapter 120. Since a result of the determination is "not identical", the HDMI communication processing section included in the wireless adapter 120 discards the CEC command. If the result of the determination is "identical", the HDMI communication processing section included in the wireless adapter 120 executes the CEC command.

### [Additional Remarks]

The above embodiment discussed the configuration in which the wireless adapter 10, which is connected to a sync device such as television 30 via a wired connection, transmits a command containing identification information to the wireless adapter 20 which is connected to source devices such as the recorder 40a via a wired connection. However, the present invention is not limited to such a configuration. Alternatively, it is possible that a wireless adapter, which is connected to a source device via a wired connection, transmits a command containing identification information to a wireless adapter which is connected to a sync device via a wired connection.

In such a case, an example of the wireless adapter connected to the source device via a wired connection is a wireless adapter that includes (i) a DIP switch 14 (first retaining section), (ii) an HDMI communication processing section 12 (an issuing section) which issues a command containing the identification information, and (iii) a wireless communication section 13 (a transmitting section) which wirelessly transmits the command. An example of the wireless adapter connected to the sync device via a wired connection is a wireless adapter that includes (a) a DIP switch 24 (second retaining section) for retaining identification information retained by the DIP switch 14, (b) a wireless communication section 23 (a receiving section) which receives the command that has been wirelessly transmitted, and (c) an HDMI communication processing section 22 (an executing section) which executes the command only in a case where the command received by the wireless communication section 23 contains identification information identical to the identification information retained by the DIP switch 24.

According to the configuration, a command containing identification information is wirelessly transmitted from a wireless adapter, which is connected to at least one source device, to a wireless adapter which is connected to a sync device.

### [Summary]

A wireless system (1) in accordance with Aspect 1 of the present invention includes: a first wireless communication device (wireless adapter 10) to be connected to a sync device via a wired connection; and a second wireless communication device (wireless adapter 20) to be connected to at least one source device via a wired connection, the first wireless communication device (wireless adapter 10) and the second wireless communication device (wireless adapter 20) wirelessly communicating with each other so that content supplied from the at least one source device is transmitted to the sync device, the first wireless communication device (wireless adapter 10) including a first retaining section (DIP switch 14) which retains identification information for distinguishing the wireless system (1) from another wireless system, an issuing section (HDMI communication processing section) which issues a command containing the identification information, and a transmitting section (wireless communication section 13) which wirelessly transmits the command issued by the issuing section (HDMI communication processing section 12), the second wireless communication device (wireless adapter 20) including a second retaining section (DIP switch 24) which retains identification information identical to the identification information retained by the first retaining section (DIP switch 14), a receiving section (wireless communication section 23) which receives a received command that has been wirelessly transmitted, and an executing section (HDMI communication processing section 22) which executes the received command only in a case where the received command contains identification information identical to the identification information retained by the second retaining section (DIP switch 24).

According to the configuration, the executing section included in the second wireless communication device executes the received command only in a case where the received command contains identification information identical to the identification information retained by the second retaining section. In other words, the executing section executes only the command which has been transmitted from the transmitting section included in the first wireless communication device. Therefore, in a case where there are a plurality of wireless systems each realizing HDMI connection, wireless systems configured as described above prevent interference in wireless communication among the wireless systems.

A wireless system in accordance with Aspect 2 of the present invention is preferably configured in Aspect 1 such that: the first wireless communication device (wireless adapter 10) includes a first storage section in which a physical address is stored; the command issued by the issuing section (HDMI communication processing section 12) contains the physical address; the second wireless communication device (wireless adapter 20) includes a second storage section in which a physical address identical to the physical address stored in the first storage section is stored; and the executing section (HDMI communication processing section 22) executes the received command only in a case where (a) the received command contains identification information identical to the identification information retained by the second retaining section (DIP switch 24) and (b) the received command contains a physical address identical to the physical address stored in the second storage section.

According to the configuration, the executing section included in the second wireless communication device executes the received command only in a case where (a) the received command contains identification information identical to the identification information retained by the second retaining section and (b) the received command contains a physical address identical to the physical address stored in the second storage section. Therefore, even in a case where there are a plurality of wireless systems each realizing HDMI connection and where some of the plurality of wireless systems retain identical identification information, wireless systems configured as described above prevent interference in wireless communication.

The wireless system in accordance with Aspect 3 of the present invention is preferably configured in Aspect 1 or 2 such that the first retaining section (DIP switch 14) and the second retaining section (DIP switch 24) are each a DIP switch.

With the configuration, a user can easily change, by changing settings of the DIP switches, identical pieces of identification information retained by the first retaining section and by the second retaining section. Therefore, even in a case where there are a plurality of the wireless systems retaining overlapping identification information, the user can easily change the settings so that the respective pieces of identification information do not overlap each other.

The wireless system in accordance with Aspect 4 of the present invention can be configured in Aspect 1 or 2 such that: the first retaining section and the second retaining section are each a memory; and in a case where a user executes a particular operation on the first wireless communication device, (a) the transmitting section (wireless communication section 13) transmits the identification information retained by the first retaining section, (b) the receiving section (wireless communication section 23) receives the identification information transmitted from the transmitting section (wireless communication section 13), and (c) the second retaining section retains the identification information received by the receiving section (wireless communication section 23).

According to the configuration, the particular operation of the user on the first wireless communication device causes the identification information retained by the first retaining section to be wirelessly transmitted by the transmitting section and then to be written in the second retaining section. That is, the particular operation on the first wireless communication device is all that the user needs to do for synchronization of the respective pieces of identification information retained by the first retaining section and by the second retaining section. This increases the convenience of the user.

The wireless system in accordance with Aspect 5 of the present invention is preferably configured in any one of Aspects 1 through 4 such that the command issued by the issuing section is a command that instructs the second wireless communication device (wireless adapter 20) to switch between source devices from which content is to be supplied.

With the configuration, the second wireless communication device can switch between the source devices by executing the command.

According to the wireless system in accordance with each of the above aspects, a command containing identification information is transmitted does not necessarily need to be transmitted in a direction from (a) a wireless communication device connected to a sync device via a wired connection to (b) a wireless communication device connected to at least one source device. Alternatively, the wireless system can be configured such that a command containing identification information is transmitted in a direction from (a) a wireless communication device connected to at least one source device to (b) a wireless communication device connected to a sync device via a wired connection.

That is, a wireless system in accordance with Aspect 8 of the present invention includes: a first wireless communication device (wireless adapter 10) to be connected to at least one source device via a wired connection; and a second wireless communication device (wireless adapter 20) to be connected to a sync device via a wired connection, the first wireless communication device (wireless adapter 10) and the second wireless communication device (wireless adapter 20) wirelessly communicating with each other so that content supplied from the at least one source device is transmitted to the sync device, the first wireless communication device (wireless adapter 10) including a first retaining section (DIP switch 14) which retains identification information for distinguishing the wireless system from another wireless system, an issuing section (HDMI communication processing section 12) which issues a command containing the identification information, and a transmitting section (wireless communication section 13) which wirelessly transmits the command issued by the issuing section (HDMI communication processing section 12), the second wireless communication device (wireless adapter 20) including a second retaining section (DIP switch 24) which retains identification information identical to the identification information retained by the first retaining section (DIP switch 14), a receiving section (wireless communication section 23) which receives a received command that has been wirelessly transmitted, and an executing section which executes the received command only in a case where the received command contains identification information identical to the identification information retained by the second retaining section (DIP switch 24).

The present invention is not limited to the description of the embodiments, but can be altered in many ways by a person skilled in the art within the scope of the claims. An embodiment derived from a proper combination of technical means disclosed in different embodiments is also encompassed in the technical scope of the present invention.

The embodiments and the concrete examples, which have been discussed in the detailed description, are illustrative only, which should not be narrowly interpreted within the limits of such embodiments and concrete examples, but are rather meant to be applied in any variations within the spirit of the present invention, provided that such variations do not exceed the scope of the patent claims set forth below.

### Industrial Applicability

The present invention is suitable as a wireless system for realizing HDMI connection.

### Reference Signs List

- 1: Wireless system
- 10: Wireless adapter
- 11: HDMI terminal
- 12: HDMI communication processing section
- 13: Wireless communication section
- 14: DIP switch
- 15: Remote control signal receiving section
- 20: Wireless adapter
- 21: HDMI terminal
- 22: HDMI communication processing section
- 23: Wireless communication section
- 24: DIP switch
- 25: Source switching section
- 30: Television
- 40a: Recorder
- 40b: Tuner
- 40c: Audio device

## Claims

1. A wireless system comprising:
a first wireless communication device to be connected to a sync device via a wired connection; and
a second wireless communication device to be connected to at least one source device via a wired connection,
the first wireless communication device and the second wireless communication device wirelessly communicating with each other so that content supplied from the at least one source device is transmitted to the sync device,
the first wireless communication device including
a first retaining section which retains identification information for distinguishing the wireless system from another wireless system,
an issuing section which issues a command containing the identification information, and
a transmitting section which wirelessly transmits the command issued by the issuing section,
the second wireless communication device including
a second retaining section which retains identification information identical to the identification information retained by the first retaining section,
a receiving section which receives a received command that has been wirelessly transmitted, and
an executing section which executes the received command only in a case where the received command contains identification information identical to the identification information retained by the second retaining section.

2. A wireless system as set forth in claim 1, wherein:
the first wireless communication device includes a first storage section in which a physical address is stored;
the command issued by the issuing section contains the physical address;
the second wireless communication device includes a second storage section in which a physical address identical to the physical address stored in the first storage section is stored; and
the executing section executes the received command only in a case where (a) the received command contains identification information identical to the identification information retained by the second retaining section and (b) the received command contains a physical address identical to the physical address stored in the second storage section.

3. The wireless system as set forth in claim 1 or 2, wherein
the first retaining section and the second retaining section are each a DIP switch.

4. The wireless system as set forth in claim 1 or 2, wherein:
the first retaining section and the second retaining section are each a memory; and
in a case where a user executes a particular operation on the first wireless communication device, (a) the transmitting section transmits the identification information retained by the first retaining section, (b) the receiving section receives the identification information transmitted from the transmitting section, and (c) the second retaining section retains the identification information received by the receiving section.

5. The wireless system as set forth in any one of claims 1 through 4, wherein
the command issued by the issuing section is a command that instructs the second wireless communication device to switch between source devices from which content is to be supplied.

6. A wireless communication device to be connected to a sync device via a wired connection,
the wireless communication device and another wireless communication device, which is to be connected to at least one source device via a wired connection, together making up a wireless system in which the wireless communication device and the another wireless communication device wirelessly communicate with each other so that content supplied from the at least one source device is transmitted to the sync device,
the wireless communication device including:
a retaining section which retains identification information for distinguishing the wireless system from another wireless system;
an issuing section which issues a command containing the identification information; and
a transmitting section which wirelessly transmits the command issued by the issuing section.

7. A wireless communication device to be connected to at least one source device via a wired connection,
the wireless communication device and another wireless communication device, which is to be connected to a sync device via a wired connection, together making up a wireless system in which the wireless communication device and the another wireless communication device wirelessly communicate with each other so that content supplied from the at least one source device is transmitted to the sync device,
the wireless communication device including:
a second retaining section which retains identification information identical to identification information retained by a first retaining section that is included in the another wireless communication device;
a receiving section which receives a command that has been wirelessly transmitted; and
an executing section which executes the command only in a case where the command contains identification information identical to the identification information retained by the second retaining section.

8. A wireless system comprising:
a first wireless communication device to be connected to at least one source device via a wired connection; and
a second wireless communication device to be connected to a sync device via a wired connection,
the first wireless communication device and the second wireless communication device wirelessly communicating with each other so that content supplied from the at least one source device is transmitted to the sync device,
the first wireless communication device including
a first retaining section which retains identification information for distinguishing the wireless system from another wireless system,
an issuing section which issues a command containing the identification information, and
a transmitting section which wirelessly transmits the command issued by the issuing section,
the second wireless communication device including
a second retaining section which retains identification information identical to the identification information retained by the first retaining section,
a receiving section which receives a received command that has been wirelessly transmitted, and
an executing section which executes the received command only in a case where the received command contains identification information identical to the identification information retained by the second retaining section.

9. A wireless communication device to be connected to at least one source device via a wired connection,
the wireless communication device and another wireless communication device, which is to be connected to a sync device via a wired connection, together making up a wireless system in which the wireless communication device and the another wireless communication device wirelessly communicate with each other so that content supplied from the at least one source device is transmitted to the sync device,
the wireless communication device including:
a retaining section which retains identification information for distinguishing the wireless system from another wireless system;
an issuing section which issues a command containing the identification information; and
a transmitting section which wirelessly transmits the command issued by the issuing section.

10. A wireless communication device to be connected to a sync device via a wired connection,
the wireless communication device and another wireless communication device, which is to be connected to at least one source device via a wired connection, together making up a wireless system in which the wireless communication device and the another wireless communication device wirelessly communicate with each other so that content supplied from the at least one source device is transmitted to the sync device,
the wireless communication device including:
a second retaining section which retains identification information identical to identification information retained by a first retaining section that is included in the another wireless communication device;
a receiving section which receives a command that has been wirelessly transmitted; and
an executing section which executes the command only in a case where the command contains identification information identical to the identification information retained by the second retaining section.
